# EUROPÄISCHE PATENTSCHRIFT

(11) **EP 2 368 437 B1**
(45) Veröffentlichungstag und Bekanntmachung des Hinweises auf die Patenterteilung: **21.01.2015**
(21) Anmeldenummer: 10003212.7
(22) Anmeldetag: 25.03.2010
(51) Int. Cl.: A23C 3/033, A23C 7/04, A23C 19/05

(54) **Verfahren zur Herstellung von Käsereimilch aus Rohmilch**
Method for manufacturing cheese-making milk from raw milk
Procédé de fabrication de lait de fromagerie à partir de lait cru

(43) Veröffentlichungstag der Anmeldung: 28.09.2011
(73) Patentinhaber: Molkerei Alois Müller GmbH & Co. KG, 86850 Aretsried (DE)
(72) Erfinder: Cloidt, Roland, 01454 Radeberg (DE); Lehmann, Hanno, 59846 Sundern (DE); Strunk, Andreas, 27404 Zeven (DE)
(74) Vertreter: Leinweber & Zimmermann

(56) Entgegenhaltungen:
- WO-A1-97/49295
- WO-A1-98/41102
- WO-A2-2008/002492
- DE-C1- 10 036 085
- GB-A- 504 092
- US-A1- 2002 012 732
- US-B1- 6 372 276
- Westfalia Separator: "New cold milk skimming system" Processingtalk 11. September 2007 (2007-09-11), Seiten 1-2, XP002595618 Gefunden im Internet: URL:http://web.archive.org/web/20070901103 115/http://www.processingtalk.com/news/wet /wet105.html [gefunden am 2010-08-05]
- GEA Westfalia separator: "Milchentrahmung mit Westfalia Separator hyvol proplus-Separatoren" 4. November 2005 (2005-11-04), GEA Westfalia Separator , Germany , XP002595619 , Seiten 1-2 * Seite 2, Absatz 4 - Absatz 6 *
- BARTH C A: "EINSATZ DES BACTOTHERM-VERFAHRENS FUR MILCH" DMZ. LEBENSMITTELINDUSTRIE UND MILCHWISSENSCHAFT, VOLKSWIRTSCHAFTLICHER VERLAG GMBH. MUNCHEN, DE, Bd. 110, Nr. 14, 6. April 1989 (1989-04-06), Seite 426, XP000007020 ISSN: 0938-9369
- ZETTIER K H: "REINIGUNG VON MILCH UND MOLKE" DMZ. LEBENSMITTELINDUSTRIE UND MILCHWISSENSCHAFT, VOLKSWIRTSCHAFTLICHER VERLAG GMBH. MUNCHEN, DE, Bd. 112, Nr. 13, 28. März 1991 (1991-03-28), Seiten 366-370, XP000201309 ISSN: 0938-9369

## Beschreibung

Die Erfindung bezieht sich auf ein Verfahren zur Herstellung von Käsereimilch aus gekühlter Rohmilch, bei dem die Rohmilch in Magermilch, Rahm und Feststoffe, dem sogenannten Separatorschlamm separiert, die separierte Magermilch durch eine dosierte Zugabe von Rahm und ggf. weiteren Milchinhaltsstoffen standardisiert und die standardisierte Milch einer ihrer Pasteurisierung dienenden Erhitzung unterzogen wird.

Der Zweck eines derartigen Verfahrens besteht darin, die Rohmilch, die von einem Erzeugerbetrieb oder einer Sammelstelle in unbehandelter Form zur Verfügung gestellt wird, derart aufzubereiten, dass sie den produktionstechnischen und gesetzlichen Anforderungen für die Herstellung von Käse genügt. Diese Käsereimilch wird auch als "Kesselmilch" bezeichnet.

Bekannte Verfahren der eingangs genannten Art beginnen mit einer Erhitzung der Rohmilch durch Wärmeaustausch mit Wärmeträgermedien bei gleichzeitiger teilweiser Wärmerückgewinnung. Die Separation in Magermilch, Rahm und Separatorschlamm findet in diesem erhitzten Zustand der Rohmilch statt. Ferner wird die Erhitzung soweit getrieben, dass eine erste Thermisierung oder Pasteurisierung stattfindet. Nach ihrer anschließenden Standardisierung wird die standardisierte Milch in einem Tank vorgestapelt und die aus dem Tank abgezogene vorgestapelte Milch durch erneute Erhitzung einer zweiten Pasteurisierung unterzogen.

Allerdings werden durch diese Pasteurisierung, die beispielsweise in einem Temperaturbereich von 72° bis 74°C während einer Zeitdauer von 30 Sekunden ausgeführt wird, die in der Rohmilch vorhandenen thermoresistenten Keime nicht vollständig abgetötet. Das Wachstumsoptimum dieser verbliebenen Keime liegt bei etwa 45°C. Während der an die Pasteurisierung anschließenden Wärmerückgewinnung durchläuft die Milch den diesem Wachstumsoptimum entsprechenden Temperaturbereich, in dem sich die in ihr verbliebenen Keime stürmisch vermehren. Die bei der ersten Pasteurisierung selektivierten Keime erfahren während der zweiten Pasteurisierung ein weiteres Wachstum.

Diese Keime können bei der Käsereifung zu Fehlgärungen und Käsefehlern führen, beispielsweise Fehllochungen. Außerdem enthält die bei der Käseherstellung ablaufende Molke einen entsprechend hohen Anteil der thermoresistenten Keime. Da in den molkeverarbeitenden Prozessen keine ausreichend hohen Erhitzungstemperaturen Anwendung finden, sind die in ihr enthaltenen thermoresistenten Keime unerwünscht und können zu Spezifikationsverletzungen, insbesondere hinsichtlich der Keimzahl, in den Endprodukten führen.

Außerdem hat die mit dem bekannten Verfahren verbundene zweimalige Erhitzung einen hohen Energieverbrauch zur Folge.

Bei einem bekannten Verfahren zur Herstellung von Konsummilch (US 2002/012732 A1) wird Rohmilch mit einem Kaltmilchseparator in einen Magermilchanteil und einen Rahmanteil separiert. Letzterer wird standardisiert und teilweise dem separierten Magermilchanteil beigemischt, wodurch eine standardisierte Milch gewonnen wird. Hieraus wird durch Filtration, Wärmebehandlung und Homogenisierung die verpackungsfertige Konsummilch gewonnen.

Ebenso wird bei einem weiteren bekannten Konsummilchverfahren (US 6,372,276 B1) gekühlte Rohmilch mit einem Kaltmilchseparator in einen Rahmanteil und einen standardisierten Milchanteil separiert. Letzterer wird durch Ultrahocherhitzung sterilisiert und weiteren Verarbeitungsschritten unterzogen, in denen insbesondere eine Enzymdeaktivierung und Homogenisierung vorgesehen ist.

Ein anderes bekanntes Konsummilchverfahren (WO 98/41102 A1) beruht ebenfalls auf einer Kaltmilchseparation der Rohmilch und einer Standardisierung der separierten Magermilch durch Rückführung des separierten Rahms. Diese standardisierte Milch wird einer Ultrahocherhitzung unterzogen, homogenisiert und als Konsummilch abgefüllt.

Bei einem weiteren bekannten Verfahren zur Herstellung aseptischer Konsummilch (WO 97/49295) wird die Rohmilch mittels eines Mikrofilters in ein steriles Permeat und ein Retentat aufgespalten, welches einer Sterilisierung bei Temperaturen zwischen 120 und 165° C unterzogen wird. Das hochtemperaturbehandelte Retentat und das Permeat werden zusammengemischt, die Mischung homogenisiert und aseptisch abgepackt.

Bei einem bekannten Verfahren zur Herstellung von Cheddarkäse (GB 504 092 A) wird in einem Separator der Rahm von der Rohmilch abgetrennt und auf eine Homogenisierungstemperatur von etwa 63° C erhitzt. Anschließend wird der homogenisierte Rahm mit der separierten Magermilch gemäß einem gewünschten Fettgehalt gemischt und das Gemisch pasteurisiert.

Weiterhin ist es bekannt (C.A. Barth: "Einsatz des Bactotherm-Verfahrens für Milch", Deutsche Molkerei-Zeitung (DMZ) Bd. 110 (1989)), den Keimgehalt von Milch durch Baktofugation und Sterilisation des Baktofugats zu reduzieren.

Es sind sowohl Warmmilchseparatoren als auch Kaltmilchseparatoren bekannt (Westfalia Separator: "New cold milk skimming system", Processingtalk 4. November 2005, Seite 1 bis 2; GEA Westfalia Separator: "Milchentrahmung mit Westfalia Separator hyvol proplus-Separatoren", 4.11.2005, Seiten 1 bis 2). Weiterhin ist der Einsatz von Entrahmungsseparatoren, Reinigungsseparatoren und Entkeimungsseparatoren für die Reinigung von Milch und Molke bekannt (K.-H. Zettier: "Reinigung von Milch und Molke", Deutsche Molkerei-Zeitung Bd. 112 (1991), 28. März, Nr. 13, Seiten 366-370).

Demgegenüber liegt der Erfindung die Aufgabe zugrunde, ein Verfahren der eingangs genannten Art zu schaffen, bei dem die Qualität der hergestellten Käsereimilch verbessert und außerdem der Energiebedarf herabgesetzt ist.

Erfindungsgemäß wird dies mit einem Verfahren der eingangs genannten Art dadurch erreicht, dass die Separation in einem kalten Zustand der Rohmilch mit einem Kaltmilchseparator und die Erhitzung nur an der standardisierten Milch vorgenommen wird, und dass aus der pasteurisierten standardisierten Milch ein Keimkonzentrat absepariert wird.

Bei der Erfindung erfolgt also die Separation der Rohmilch in einem kalten Zustand. Hierfür geeignete Kaltmilchentrahmungsseparatoren, die insbesondere auf Zentrifugalwirkung beruhen, sind bekannt. Eine Erhitzung bis auf Pasteurisierungstemperaturen findet erfindungsgemäß nur einmal statt. Dadurch wird die einzusetzende Energie gegenüber den bekannten Verfahren halbiert. Außerdem wird das Wachstum thermoresistenter Keime vermieden. Die Einmalerhitzung führt ferner zu einer Vereinfachung des Prozesses und erlaubt eine schnelle Verarbeitung der Rohmilch. Durch diese Verfahrensvereinfachung ist der Gesamtprozess auch besser kontrollierbar, wodurch die Anzahl kritischer Kontrollpunkte des Gesamtprozesses deutlich reduziert wird.

Die mit der Einmalerhitzung der standardisierten Milch erreichte Keimreduzierung verbessert nicht nur die Qualität der hergestellten Käsereimilch, sondern führt auch zu wesentlich längeren Produktionsstandzeiten des Verfahrens, weil die Zeitintervalle, nach denen eine Hauptreinigung der zur Separation der Rohmilch dienenden Einheiten einer Anlage, mit der das erfindungsgemäße Verfahren durchgeführt wird, wesentlich länger sind als bei einem Verfahren, in dem die Rohmilch in einem warmen Zustand separiert wird.

In einer vorteilhaften Ausführungsform des erfindungsgemäßen Verfahrens ist vorgesehen, dass die Temperatur des kalten Zustandes der Rohmilch durch Wärmeaustausch mit einem Wärmeträgermedium auf einen für ihre Separation optimalen Wert eingestellt wird. Normalerweise steht die Rohmilch in einem gekühlten Zustand zur Verfügung, dessen Temperatur nicht dem Wert entspricht, bei dem ihre Kaltseparation am wirkungsvollsten und für das Milchfett (Rahm) am schonendsten betrieben werden kann. Deshalb wird sie durch den Wärmeaustausch auf den für ihre Separation optimalen Wert eingestellt. Die dabei anfallende Austauschkälte kann insbesondere durch eine sogenannte Wärmeschaukel anderen Prozessen, die innerhalb eines Molkereibetriebs ablaufen, zur Verfügung gestellt werden. Beispielsweise ist die Temperatur der gekühlten Rohmilch nicht höher als 6°C, während die für die Kaltseparation optimale Temperatur im Bereich von 8° bis 12°C liegt. In diesem Fall erfolgt der Wärmeaustausch durch Anwärmen der Rohmilch, damit die Temperatur ihres kalten Zustandes auf einen in diesem Bereich liegenden Wert angehoben wird. Normalerweise liegt in Molkereibetrieben ein Wärmeüberschuss vor. Deshalb kann als Wärmeträgermedium für das Anwärmen Niedrigtemperaturwasser, das in Prozessen des Molkereibetriebes anfällt, verwendet werden. Dieses Niedrigtemperaturwasser wird dem Wärmeaustauschprozess mit einer Temperatur, die beispielsweise im Bereich von 35°C liegt, zugeführt und kühlt sich durch den Wärmeaustausch auf eine Temperatur, die beispielsweise im Bereich von 11 ° bis 15°C liegt, ab. Dadurch stellt das erfindungsgemäße Verfahren eine wichtige Kältequelle für Prozesse des Molkereibetriebs zur Verfügung.

Der für die Standardisierung der aus der Rohmilch separierten Magermilch zuzugebende Rahm kann aus dem aus ihr abseparierten Rahm entnommen werden. Zusätzlich oder alternativ kann der zuzugebende Rahm aber auch aus anderen Prozessen, insbesondere aus einem Molkeverarbeitungsprozess, in dem Molkenrahm anfällt, entnommen weden. Weiterhin kann bei der Standardisierung durch eine dosierte Zugabe von Eiweiß, das beispielsweise einem anderen Milchverarbeitungsprozess entnommen wird, auch der Eiweißgehalt standardisiert werden.

Ein wichtiger Gesichtspunkt des erfindungsgemäßen Verfahrens besteht darin, dass aus der pasteurisierten standardisierten Milch ein Keimkonzentrat absepariert wird. Hierdurch wird der Anteil qualitätsgefährdender Keime in der Käsereimilch weiterhin reduziert. Diese Abseparierung kann durch eine bekannte Entkeimungszentrifugation, die entweder 1-stufig oder 2-stufig ausgeführt werden kann, erfolgen. Wegen der bei dem erfindungsgemäßen Verfahren durchgeführten Separation der Rohmilch im kalten Zustand in Verbindung mit moderner Entkeimungstechnologie ist die Menge des anfallenden Keimkonzentrats jedoch so klein, dass es keiner weiteren Bearbeitung bedarf, sondern ohne Einbußen an Wirtschaftlichkeit und ohne weitere Bearbeitung aus dem Prozess ausgeschleust und entsorgt werden kann.

Im Rahmen der Erfindung ist ferner vorgesehen, dass die standardisierte Milch vor ihrer Pasteurisierung vorgestapelt wird. Durch die Vorstapelung in einem Vorstapeltank kann, sofern es erforderlich ist, eine Verweilzeit generiert werden, falls der zu produzierende Käse dieses erforderlich macht.

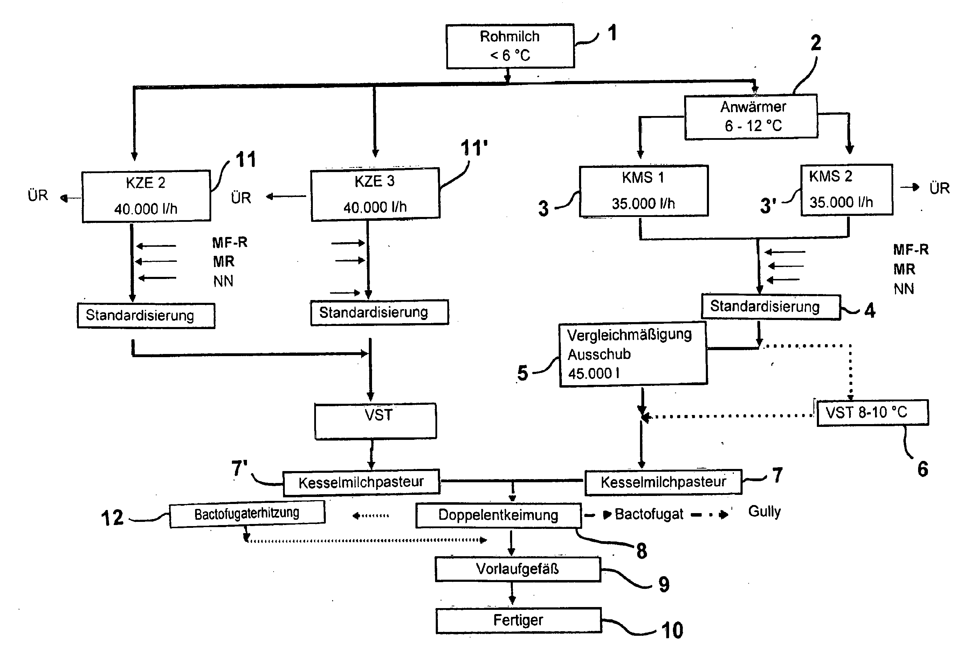

Weitere Merkmale, Einzelheiten und Vorteile der Erfindung ergeben sich aus der folgenden Beschreibung und der Zeichnung, in deren einziger Figur auf der rechten Seite beispielhaft ein erfindungsgemäßer Verfahrensablauf und im Vergleich dazu auf der linken Seite ein Verfahrensablauf nach dem Stand der Technik dargestellt ist.

In der Zeichnung veranschaulicht ein Block 1 die Zufuhr von Rohmilch, die auf eine Temperatur unterhalb 6°C gekühlt ist. Von dort aus wird die Rohmilch durch einen Anwärmer 2 hindurchgeleitet, in dem sie durch Wärmeaustausch mit einem Wärmeträgermedium soweit angewärmt wird, dass die Temperatur ihres kalten Zustandes in einem Bereich von 6° bis 12°C liegt. Bei dem Wärmeträgermedium kann es sich um Niedrigtemperaturwasser aus einem Prozess des Molkereibetriebes handeln, das beispielsweise mit einer Temperatur von etwa 35°C zugeführt wird und nach dem Wärmeaustausch den Anwärmer 2 mit einer Temperatur von 11° ° bis 15°C verlässt.

Vom Ausgang des Anwärmers 2 wird die Rohmilch zwei parallelgeschalteten Kaltmilchentrahmungsseparatoren 3, 3' zugeleitet, in denen sie in ganz oder teilweise entrahmte Magermilch, Rahm und Separatorschlamm separiert wird. Letzterer wird an einem in der Figur nicht dargestellten Ausgang der Separatoren 3, 3' aus dem Verfahren ausgeschleust.

Ein Anteil des in den Separatoren 3, 3' separierten Rahms wird der separierten Magermilch in dosierter Weise wieder zugegeben, um Letztere zu standardisieren. Der verbleibende Überschussanteil wird aus dem Verfahren entnommen. Dies ist durch den mit dem Symbol "ÜR" bezeichneten Pfeil angedeutet. Weiterhin werden zum Zwecke der durch einen Block 4 veranschaulichten Standardisierung Eiweiß, das z.B. als Mikrofiltrationsretentat eines Milchverarbeitungsprozesses gewonnen worden ist, Molkenrahm, der aus einem Molkeverarbeitungsprozess gewonnen worden ist und ggf. weitere Zusätze in dosierten Megen zugegeben. Dies ist in der Zeichnung durch die Pfeile "MF-R", "MR" bzw. "NN" veranschaulicht.

Die solchermaßen standardisierte Milch gelangt in einen Puffertank 5, der zur Vergleichmäßigung bei An- und Abfahrvorgängen oder Regelschwankungen der Standardisierung vorgesehen ist. Alternativ kann die standardisierte Milch an einen Vorstapeltank 6 übergeben werden, in dem die Milch verweilen könnte, falls Letzteres erforderlich ist.

Von dem Puffertank 5 oder dem Vorstapeltank 6 aus wird die standardisierte Milch einer ihrer Pasteurisierung dienenden Kurzzeiterhitzung 7 zugeführt. In dieser erfolgt die Erhitzung durch Wärmeaustausch mit einem Wärmeträgermedium auf beispielsweise 72° bis 74°C für eine Dauer von 15 bis 30 Sekunden. Außerdem wird darin die pasteurisierte Milch durch Wärmeaustausch mit einem weiteren Wärmeträgermedium, das als Kühlmedium wirkt, rückgekühlt und dadurch Wärme regenerativ zurückgewonnen. Bei dem als Heizmedium dienenden Wärmeträgermedium und dem als Kühlmedium dienenden weiteren Wärmeträgermedium handelt es sich beispielsweise um Wasserdampf bzw. Eiswasser, die in einem Molkereibetrieb erzeugt werden.

Nach der Kurzzeiterhitzung 7 wird die pasteurisierte Milch einer zweistufigen Entkeimung in zwei hintereinandergeschalteten Entkeimungszentrifugen unterzogen. Dabei wird ein Keimkonzentrat absepariert und aus dem Verfahren ausgeschleust. Ein Beispiel hierfür ist die unter der Bezeichnung "Bactofugat" bekannte Keimabtrennung.

Von der Entkeimung 8 gelangt die Käsereimilch über ein Vorlaufgefäß 9 in einen Käsefertiger 10 für die Schnittkäserei.

Der links von den die Rohmilchzufuhr veranschaulichenden Block 1 eingezeichnete Zweig veranschaulicht zum Vergleich eine nicht erfindungsgemäße Verfahrensführung, bei der die Rohmilch in zwei zueinander parallelgeschalteten Stufen 11, 11' unmittelbar einer Kurzzeiterhitzung und Separation im heißen Zustand unterzogen wird. Die in den Stufen 11, 11' erfolgende Warmseparation und Pasteurisierung der Rohmilch führt zu einem zusätzlichen Energiebedarf in der Größe der für die nachgeschaltete Pasteurisierung der standardisierten Milch vorgesehenen Kurzzeiterhitzung 7'. Wegen des bei der Rückkühlung der pasteurisierten Milch in den Stufen 11, 11' durchlaufenen Wachstumsoptimums thermoresistenter Keime ist ferner der Keimgehalt nach der Kurzzeiterhitzung 7' gegenüber dem erfindungsgemäßen Verfahrensablauf wesentlich höher. Deshalb fällt in der anschließenden Entkeimung 8 eine sehr viel größere Menge an Keimkonzentrat an, als es bei dem erfindungsgemäßen Verfahren der Fall ist. Deshalb kann aus Gründen der Wirtschaftlichkeit das in dieser großen Menge anfallende Keimkonzentrat in der Regel nicht verworfen werden, sondern muss, wie bei dem Bezugszeichen 12 angedeutet, einer Erhitzungsbehandlung unterzogen werden, die seine Rückführung in die Käsereimilch erlaubt. Für einen Großbetrieb errechnet sich die durch das erfindungsgemäße Verfahren erzielte Energieeinsparung auf 5 GWh im Jahr aus der Beschränkung auf die einmalige Erhitzung in der Kurzzeiterhitzung 7 und auf 1,4 GWh pro Jahr aus der in dem Anwärmer 2 gewonnenen Kälte. Somit beträgt die jährliche Energieeinsparung rund 6,4 GWh.

### Verzeichnis der Bezugszeichen

- 1: Rohmilchzufuhr
- 2: Anwärmer
- 3, 3': Kaltmilchentrahmungsseparatoren
- 4: Standardisierung
- 5: Puffertank
- 6: Vorstapeltank
- 7: Kurzzeiterhitzung
- 8: Entkeimung
- 9: Vorlaufgefäß
- 10: Käsefertiger
- 11, 11': Stufen

## Patentansprüche

1. Verfahren zur Herstellung von Käsereimilch aus gekühlter Rohmilch, bei dem die Rohmilch in Magermilch, Rahm und Separatorschlamm separiert, die separierte Magermilch durch eine dosierte Zugabe von Rahm und ggf. weiteren Milchinhaltsstoffen standardisiert und die standardisierte Milch einer ihrer Pasteurisierung dienenden Erhitzung unterzogen wird, **dadurch gekennzeichnet, daß** die Separation in einem kalten Zustand der Rohmilch mit einem Kaltmilchseparator und die Erhitzung nur an der standardisierten Milch vorgenommen wird, und daß aus der pasteurisierten standardisierten Milch ein Keimkonzentrat absepariert wird.

2. Verfahren nach Anspruch 1, **dadurch gekennzeichnet, daß** die Erhitzung nur einmal direkt vor der Einleitung der Käsereimilch in den Käsefertiger erfolgt und die gesetzlich vorgeschriebene Pasteurisierung bewirkt.

3. Verfahren nach Anspruch 1 oder 2, **dadurch gekennzeichnet, daß** neben der Erhitzung keine weitere Thermisierung der Käsereimilch erfolgt.

4. Verfahren nach Anspruch 1 bis 3, **dadurch gekennzeichnet, daß** die Temperatur des kalten Zustandes der Rohmilch durch Wärmeaustausch der gekühlten Rohmilch mit einem Wärmeträgermedium auf einen für ihre Separation optimalen Wert im Bereich von 8 bis 12 °C eingestellt wird.

5. Verfahren nach einem der Ansprüche 1 bis 4, **dadurch gekennzeichnet, daß** bei der Standardisierung zugegebener Rahm aus dem separierten Rahm entnommen wird.

6. Verfahren nach einem der Ansprüche 1 bis 5, **dadurch gekennzeichnet, daß** bei der Standardisierung zugegebener Rahm aus in einem Molkeverarbeitungsprozeß anfallenden Molkenrahm entnommen wird.

7. Verfahren nach einem der Ansprüche 1 bis 6, **dadurch gekennzeichnet, daß** bei der Standardisierung eine dosierte Zugabe von in einem Milchverarbeitungsprozeß anfallendem Einweiß vorgenommen wird.

8. Verfahren nach einem der Ansprüche 1 bis 7, **dadurch gekennzeichnet, daß** die Abseparation durch Zentrifugieren erfolgt.

9. Verfahren nach einem der Ansprüche 1 bis 8, **dadurch gekennzeichnet, daß** die standardisierte Milch vor ihrer Pasteurisierung vorgestapelt wird.

## Claims

1. A method for producing cheese dairy milk from cooled raw milk, wherein the raw milk separates into skimmed milk, cream and separator sludge, the separated skimmed milk is standardised by metered addition of cream and optionally additional milk constituents, and the standardised milk is subjected to heating that serves to pasteurise the latter, **characterised in that** the separation takes place in a cold state of the raw milk using a cold milk separator, and the heating is only applied to the standardised milk, and that a microbe concentration is separated out of the pasteurised standardised milk.

2. The method according to Claim 1, **characterised in that** the heating only takes place once directly before introducing the cheese dairy milk into the cheese processor and brings about the legally stipulated pasteurisation.

3. The method according to Claim 1 or 2, **characterised in that** no other thermisation of the cheese dairy milk in addition to the heating takes place.

4. The method according to Claims 1 to 3, **characterised in that** the temperature of the cold state of the raw milk is set to an optimal value for its separation in the range of from 8 to 12°C by heat exchange of the cooled raw milk with a heat transfer medium.

5. The method according to any of Claims 1 to 4, **characterised in that** cream added for the standardisation is extracted from the separated cream.

6. The method according to any of Claims 1 to 5, **characterised in that** cream added for the standardisation is extracted from whey cream accumulated during a whey processing procedure.

7. The method according to any of Claims 1 to 6, **characterised in that** for the standardisation there is a metered addition of albumen that accumulates during a milk processing procedure.

8. The method according to any of Claims 1 to 7, **characterised in that** the separation takes place by centrifugation.

9. The method according to any of Claims 1 to 8, **characterised in that** the standardised milk is pre-stacked before its pasteurisation.

## Revendications

1. Procédé de production de lait de fromagerie à partir de lait cru refroidi, dans lequel le lait cru est séparé en lait écrémé, crème et effluents de séparation, le lait écrémé séparé est standardisé par ajout dosé de crème et éventuellement d'autres constituants du lait et le lait standardisé est soumis à une élévation de température aux fins de sa pasteurisation, **caractérisé en ce que** la séparation du lait cru s'effectue à l'état froid à l'aide d'un séparateur de lait froid et l'élévation de température n'est effectuée que sur le lait standardisé, et **en ce qu'**un concentré bactérien est isolé du lait standardisé pasteurisé.

2. Procédé selon la revendication 1, **caractérisé en ce que** l'élévation de température ne se produit qu'une fois, directement avant l'introduction du lait de fromagerie dans la cuve à fromage, et entraîne la pasteurisation selon les prescriptions réglementaires.

3. Procédé selon la revendication 1 ou 2, **caractérisé en ce qu'**il ne se produit aucune autre thermisation du lait de fromagerie que ladite élévation de température.

4. Procédé selon la revendication 1 à 3, **caractérisé en ce que** la température du lait cru à l'état froid est réglée à une valeur de 8 à 12 °C, optimale pour sa séparation, par échange de chaleur du lait cru refroidi au moyen d'un milieu caloporteur.

5. Procédé selon l'une des revendications 1 à 4, **caractérisé en ce que** la crème ajoutée lors de la standardisation est prélevée de la crème séparée.

6. Procédé selon l'une des revendications 1 à 5, **caractérisé en ce que** la crème ajoutée lors de la standardisation est prélevée de la crème de sérum qui est générée lors d'un processus de transformation du sérum.

7. Procédé selon l'une des revendications 1 à 6, **caractérisé en ce que** la standardisation fait appel à un ajout dosé de protéines qui sont générées lors d'un processus de transformation du lait.

8. Procédé selon l'une des revendications 1 à 7, **caractérisé en ce que** l'isolation s'effectue par centrifugation.

9. Procédé selon l'une des revendications 1 à 8, **caractérisé en ce que** le lait standardisé est stocké préalablement à sa pasteurisation.
